# EUROPEAN PATENT APPLICATION

(11) **EP 1 898 512 A1**
(43) Date of publication of application: **12.03.2008**
(21) Application number: 06300934.4
(22) Date of filing: 07.09.2006
(51) Int. Cl.: H02K 1/27, H02K 15/03

(54) **Method for assembling a Rotor Sheet Stack and Devices related thereto**

(71) Applicant: Alcatel Lucent, 75008 Paris (FR)
(72) Inventor: Kramer, Oliver, 79848 Bonndorf (DE)
(74) Representative: Brose, Gerhard

(57) **Abstract**

The invention concerns a method for assembling a rotor sheet stack with magnets distributed at the periphery with alternating polarization, in which the rotor sheet stack is preassembled and the magnets are glued thereon, in which rotor sheet stacks with smooth longitudinal notches are used and pillow-shaped magnets are fitted thereto, the magnets are placed thereon in a self-centering way and glued thereon. The invention also concerns a rotor sheet stack, an electric motor, a magnet, and a rotor sheet.

## Description

The invention relates to a Method for assembling a rotor sheet stack with magnets distributed at the periphery with alternating polarization, according to the preamble of claim 1, to a rotor sheet stack according to the preamble of claim 2, an electric motor according to the preamble of claim 3, to a magnet according to the preamble of claim 4, and to a rotor sheet according to the preamble of claim 5.

Small electric motors of the kind with a rotor sheet stack with magnets distributed at the periphery with alternating polarization are well known in the art. They are widely used (especially) in brushless DC motors.

As such (permanent) magnets necessarily hold their magnetic force also during assembling, it is not easy to glue them onto the prefabricated rotor sheet stacks. Without special tool they attract one another and build small groups. Such assembling therefore costs approximately ten percent of the whole motor.

It is therefore important to find a solution to simplify assembling of such motors.

According to the invention this problem is solved by a method according to the teaching of claim 1, by a rotor sheet stack according to the teaching of claim 2, by an electric motor according to the teaching of claim 3, by a magnet according to the teaching of claim 4, and a rotor sheet according to the teaching of claim 5.

With this solution a self-centering occurs and the form of the rotor sheet stack and the matching form of the magnets build a kind of built-in assembling tool.

Besides the easier assembling such solution also has the advantage, that the characteristics of the magnetic field around the assembly has a more sinusoidal shape rather than a rectangular one. This is an effect of the pillow-shaped form of the magnets being thicker in the middle and thinner at the edges. The loss of magnetic field at such thin edges is lower than with the usual form. This allows the magnets, and as a consequence, the whole motor to be smaller.

First experiments with such motors show that they are quieter and have less unbalanced masses.

Further embodiments of the invention are to be found in the subclaims and in the description.

In the following the invention will be described with reference to the accompanying drawings in which:
- Figure 1: shows a cross section of a rotor sheet stack with magnets according to the invention.
- Figure 2: shows the functioning of the method according to the invention.

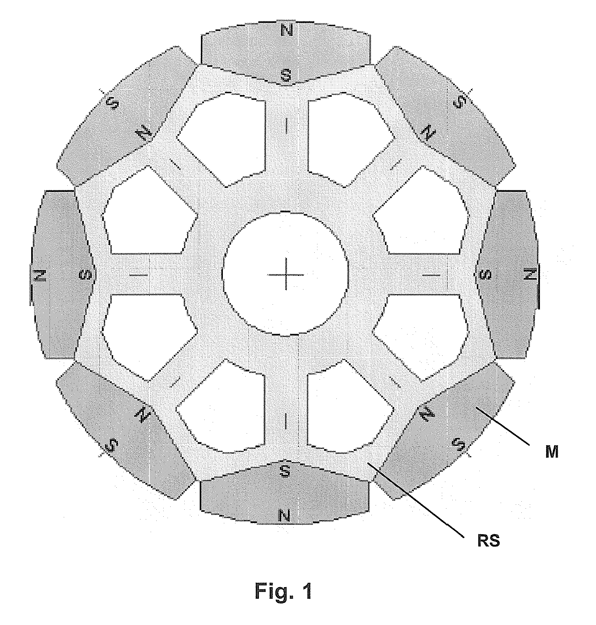

Based on the cross sectional view of figure 1 first the design of a rotor sheet stack with magnets according to the invention is described. From this of course the design of a single rotor sheet as well as the design of a single magnet become apparent. The design of a complete motor according to the invention also is clear from this.

In figure 1 we see a rotor sheet RS as a cross section of a rotor sheet stack and eight magnets M in a cross sectional view.

According to the number of magnets used here, the rotor sheet is a modification of a regular octagon. In the center there is a hole destined for the shaft of the rotor. Between this center and the outer circumference eight cut-outs are foreseen to reduce the weight of the motor.

The outer circumference carries eight places for eight magnets. These places here are flat V-shaped recesses. The whole stack consequently carries flat V-shaped longitudinal notches.

The magnets M at their bottom side - the one adjacent to the rotor sheet stack - have a form fitting to the form of the outer circumference of the stack. The upper side - opposing thereto - is a sector of a circle, so that all magnets when assembled on the rotor sheet stack substantially form a circular cylinder, as usual for rotors of such kind.

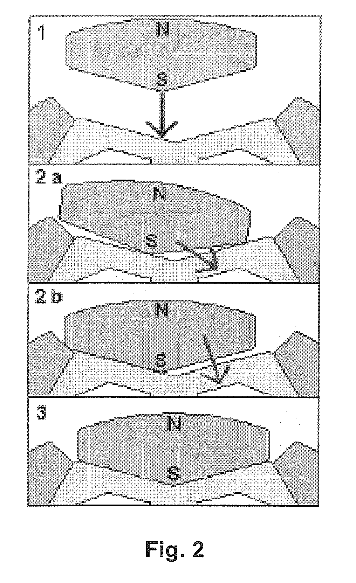

Figure 2 demonstrates what happens when assembling such rotor sheet stack with magnets. The figure shows three steps 1 to 3, with the middle step being divided into two sub steps 2a and 2b.

In order to more clearly show what happens, the drawing assumes that the two magnets neighboring to the one now being added are already fixed and glued at their position. This normally is not the fact in practice.

In step 1 a magnet to be added is brought next to the notch in the rotor sheet stack. Due to the magnetic force the magnet attracts the stack and contacts it normally in a position slightly outside the center (step 2a). Now two different types of forces act on the magnet, namely lateral forces pulling it towards either of the neighboring magnets and another force pulling it downwards to match the notch. When the latter one prevails, the magnet is pulled in the centric position matching the notch (step 2b).

As normally the rotor sheets are punched, the centre of the notch normally will not be a sharp curb and the magnets might be hindered to correctly reach their centric position. That is why there a very small extra notch may be applied.

Finally (step 3) the magnet is centered and affixed there by gluing. Of course the glue has to be applied beforehand.

It is apparent from figure 2 that a very flat notch will not be very beneficial to the centering of the magnet. In the embodiment first studied the V had an angle of 150°, now it is steeper and has 135°.

Also other forms of notches could be applied, but of course not circular ones. It must be a form where a centering is possible, for example a parabolic one.

## Claims

1. Method (Fig. 2) for assembling a rotor sheet stack with magnets (M) distributed at the periphery with alternating polarization, in which the rotor sheet stack is pre-assembled and the magnets (M) glued thereon, **characterized in, that** using rotor sheet stacks with smooth longitudinal notches and pillow-shaped magnets (M) fitting thereto, the magnets (M) are placed thereon in a self-centering way and glued thereon.

2. Rotor sheet stack with magnets (M) distributed at the periphery with alternating polarization, **characterized in, that** the rotor sheet stack shows smooth longitudinal notches, and that the magnets (M) are pillow-shaped in a way to fit thereto.

3. Electric motor with a rotor and a stator, where the rotor includes a rotor sheet stack with magnets (M) distributed at the periphery with alternating polarization, **characterized in, that** the rotor sheet stack shows smooth longitudinal notches, and that the magnets (M) are pillow-shaped in a way to fit thereto.

4. Magnet (M) for a rotor sheet stack with magnets (M) distributed at the periphery with alternating polarization, **characterized in, that** the magnet (M) is pillow-shaped and at the bottom side designed such that it fits into smooth longitudinal notches of the rotor sheet stack.

5. Rotor sheet (RS) for a rotor sheet stack with magnets (M) distributed at the periphery with alternating polarization, **characterized in, that** the rotor sheet shows smooth recesses at the periphery.

6. Rotor sheet stack according to claim 2, **characterized in, that** the smooth longitudinal notches are V-shaped ones.
